# EUROPEAN PATENT APPLICATION

(11) **EP 4 290 240 A1**
(43) Date of publication of application: **13.12.2023**
(21) Application number: 23176904.3
(22) Date of filing: 02.06.2023
(51) Int. Cl.: G01N 35/00, G01N 35/10

(54) **SAMPLE MEASURING APPARATUS AND SAMPLE MEASURING METHOD**

(30) Priority: 06.06.2022 JP 2022091494; 06.06.2022 JP 2022091517
(71) Applicant: SYSMEX CORPORATION, Kobe-shi Hyogo 651-0073 (JP)
(72) Inventor: HAYASHI, Masato, Kobe-shi, Hyogo 651-0073 (JP); KANEKO, Shuhei, Kobe-shi, Hyogo 651-0073 (JP)
(74) Representative: Hoffmann Eitle

(57) **Abstract**

A sample measuring apparatus that can respond to downsizing of an apparatus is provided. A sample measuring apparatus 1 is provided with a reagent container storage 52, in which a reagent container 580 with a reagent is accommodated, and a measuring unit 53 for measuring a sample using a reagent. The reagent container storage 52 has a housing 500, in which the reagent container 580 is accommodated, and a cooling section 501 for cooling the housing 500. A ventilation passage 602 is provided below a reagent container rack 581 in the housing 500, and at least a part of the cooling section 501 is provided at a higher part of the housing 500 than the ventilation passage 602.

## Description

### TECHNICAL FIELD

This invention relates to a sample measuring apparatus and a method of measuring a sample.

### BACKGROUND ART

A sample measuring apparatus that measures a sample using a reagent is provided with a reagent container storage that stores a reagent container filled with a reagent.

Since a reagent is required to be maintained below a predetermined temperature to maintain an accuracy of a sample measurement, the reagent container storage of the sample measuring apparatus has a function to cool a reagent in the reagent container.

Japanese Patent Publication No. 2009-8611 (Patent Document 1) discloses a sample analyzer that cools a reagent by cooling a bottom of a housing in a reagent storage by a cooling section and circulating air inside the housing by a fan installed inside the housing.

However, the above sample analyzer requires a fan to circulate air inside the housing in the reagent storage, which makes an apparatus large and unsuitable for a small apparatus.

The present invention is made in view of the above points, and an object of the present invention is to provide a sample measuring apparatus and a sample measuring method that can respond to downsizing of an apparatus.

### SUMMARY

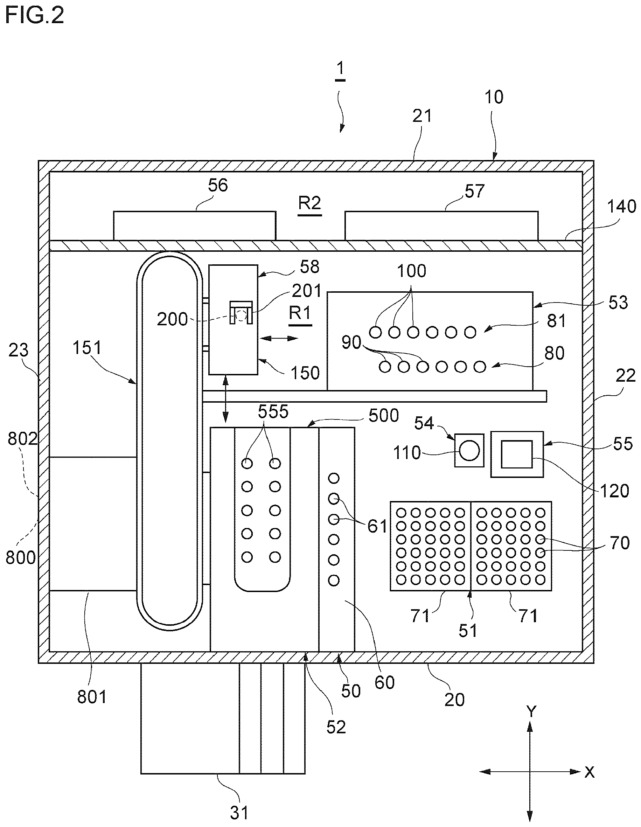

As is illustrated in FIG. 2 and FIGS. 6 to 9, a sample measuring apparatus (1) according to the present invention comprises a reagent container storage (52), in which a reagent container (580) containing a reagent is stored, and a measuring unit (53) to measure a sample using a reagent, the reagent container storage (52) has a housing (500), in which the reagent container (580) is stored, and a cooling section (501) that cools the housing (500), a ventilation passage (602) is provided below a reagent in the housing (500), and at least a part of the cooling section (501) is provided in the housing (500) at a higher part than the ventilation passage (602).

According to the sample measuring apparatus (1) according to the present invention, by cooling a part of the reagent container storage (52) higher than the ventilation passage (602) in the housing (500) with the cooling section (501), natural convection that flows through the ventilation passage (602) is generated in the housing (500), and a reagent in the housing (500) can be cooled. In this way, a fan for circulating air in the housing (500) does not need to be provided, which can accommodate downsizing of an apparatus.

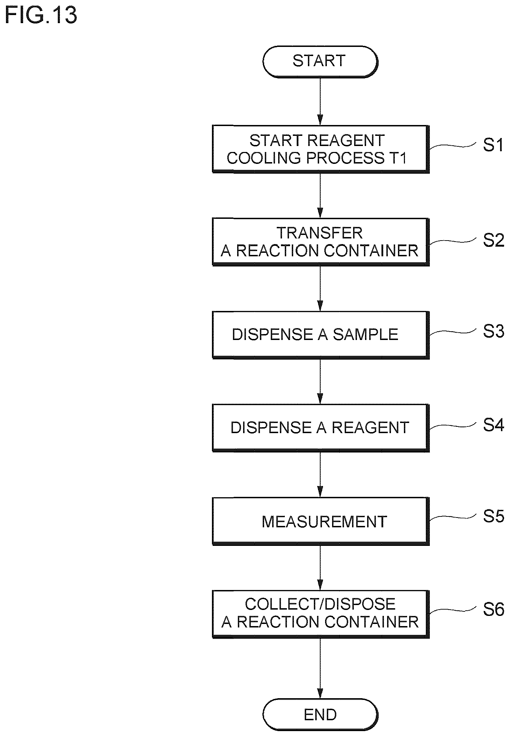

As is illustrated in FIG. 13, FIG. 2, FIG. 6 and FIG. 9, a method of measuring a sample according to the present invention is a method of measuring a sample using the sample measuring apparatus (1) provided with the ventilation passage (602) below the reagent container (580) in the housing (500), in which the reagent container (580) is stored, includes a cooling process (T1) that cools a reagent in the reagent container (580) by cooling at least a part of the housing (500) higher than the ventilation passage (602), a dispensing process (S4) that aspirates the cooled reagent in the reagent container (580) and dispenses the cooled reagent into a reaction container (70), and a measuring process (S5) that measures a sample in the reaction container (70), into which the cooled reagent is dispensed.

According to the method of measuring a sample of the present invention, by cooling a part of the housing (500) higher than the ventilation passage (602), natural convection that flows through the ventilation passage (602) is generated in the housing (500), and a reagent in the housing (500) can be cooled. In this way, a fan for circulating air in the housing (500) does not need to be provided, which can accommodate downsizing of an apparatus.

According to the present invention, it is possible to provide a sample measuring apparatus and a sample measuring method that can respond to the downsizing of an apparatus.

### BRIEF DESCRIPTION OF DRAWINGS

FIG. 1 is a perspective view illustrating an appearance of a sample measuring apparatus;
FIG. 2 is a plan view illustrating an internal structure of the sample measuring apparatus;
FIG. 3 is a block diagram relating to a control of the sample measuring apparatus;
FIG. 4 is a schematic diagram illustrating a configuration of a dispensing apparatus;
FIG. 5 is a schematic diagram illustrating a configuration of a container holder;
FIG. 6 is a perspective view illustrating a configuration of a reagent container storage;
FIG. 7 is a diagram illustrating an exploded view of the reagent container storage;
FIG. 8 is a diagram illustrating an A-A cross-sectional view of the reagent container storage;
FIG. 9 is a diagram illustrating a side view of a rack support;
FIG. 10 is a schematic diagram illustrating a drawer mechanism of the rack support;
FIG. 11 is an explanatory diagram illustrating a state in which a cooling section is installed in a heat transfer housing part;
FIG. 12 is a partial cross-sectional view of the sample measuring apparatus illustrating a configuration of an exhaust heat section of the reagent container storage;
FIG. 13 is a flow diagram illustrating a sample measuring method;
FIG. 14 is a side view of the rack support illustrating another configuration example of a ventilation passage;
FIG. 15 is a side view of the rack support and a rail section illustrating another configuration example of the ventilation passage; and
FIG. 16 is a side view of the rack support illustrating another configuration example of the ventilation passage.

### DETAILED DESCRIPTION

The following is a detailed description of an example of an embodiment of a sample measuring apparatus and a method of measuring a sample according to the present invention with reference to the drawings.

### Sample measuring apparatus

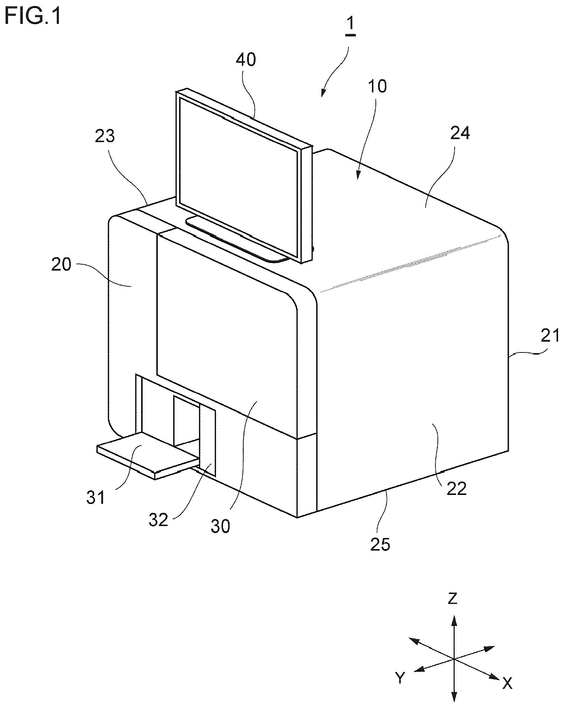

FIG. 1 is a perspective diagram illustrating an appearance of a sample measuring apparatus 1. The sample measuring apparatus 1 is used, for example, for a blood coagulation measurement to analyze the activity of a coagulation factor in a sample (blood sample).

The sample measuring apparatus 1 has an apparatus housing 10 with a substantially rectangular shape. The apparatus housing 10 has a front surface 20, a rear surface 21, a right side surface 22, a left side surface 23, a top surface 24, and a bottom surface 25. In this specification, "left" and "right" of the sample measuring apparatus 1 are based on a direction in case that the front surface 20 is viewed from the front.

The front surface 20 is provided with a cover 30 that can be opened and closed freely, and by opening the cover 30, a user can access an interior of the apparatus housing 10. The front surface 20 is provided with a door 31 to access to the interior of a reagent container storage 52, which is described below, and a door 32 to access to the interior of a sample rack storage 50.

The top surface 24 is a square flat surface, on which a monitor 40 can be installed. The monitor 40 is a touch panel display and can be used to input for an operation necessary for a sample measurement, display various information, and display result information of the sample measurement.

FIG. 2 is a plan view illustrating an example of an internal structure of the sample measuring apparatus 1. The sample measuring apparatus 1 is provided with a sample rack storage 50, a reaction container storage 51, a reagent container storage 52, a measuring unit 53, a cleaner 54, a disposal section 55, a power supply 56, a controller 57, and a dispenser 58 in the apparatus housing 10.

The sample rack storage 50 is provided on a front surface 20 side of the apparatus housing 10 rather than a center of a front/rear direction Y, and near the center of a left/right direction X of the apparatus housing 10. The sample rack storage 50 stores a sample rack that holds a plurality of sample containers. The sample rack storage 50 has a top surface 60, and a plurality of holes 61 are formed in the top surface 60. A pipette 200, which is described below, in the dispenser 58 can enter a sample container in the sample rack storage 50 through the hole 61 and aspirate a sample in the sample container. A sample rack in the sample rack storage 50 is inserted and removed from the door 32 of the apparatus housing 10 illustrated in FIG. 1.

The reaction container storage 51 illustrated in FIG. 2 is provided on the front surface 20 side of the apparatus housing 10 rather than the center of the front/rear direction Y and on a right side of the center of the left/right direction X of the apparatus housing 10. The reaction container storage 51 stores a container rack 71 that holds a plurality of reaction containers 70.

The reagent container storage 52 is provided on the front surface 20 side of the apparatus housing 10 rather than the center of the front/rear direction Y and on a left side of the center of the left/right direction X of the apparatus housing 10. The reagent container storage 52 is provided to the left of the sample rack storage 50. The reagent container storage 52 stores a plurality of reagent containers, in which reagents are stored. The details of the reagent container storage 52 are described below.

The measuring unit 53 has a heater 80 and a detector 81. The heater 80 and the detector 81 are provided on a rear surface 21 side of the apparatus housing 10 rather than the center of the front/rear direction Y and on the right side of the center of the left/right direction X of the apparatus housing 10.

The heater 80 has a plurality of holding holes 90 that hold the reaction container 70. The plurality of holding holes 90 are arranged in a row in the left/right direction X. The heater 80 can heat the reaction container 70 held in the holding hole 90 by a heat source.

The detector 81 has a plurality of holding holes 100 that hold the reaction container 70. The plurality of holding holes 100 are arranged in a row in the left/right direction X. The plurality of holding holes 100 are provided on the rear surface 21 side of the holding hole 90 of the heater 80. The detector 81 can detect measurement data concerning a sample by irradiating light to a sample in the reaction container 70 held in the holding hole 100 and receiving the light transmitted through the sample.

The cleaner 54 is provided near the center of the apparatus housing 10 in the front/rear direction Y and between the measuring unit 53 and the reaction container storage 51. The cleaner 54 has a cleaning tank 110 that cleans a pipette 200 in the dispenser 58.

The disposal section 55 is provided between the measuring unit 53 and the reaction container storage 51. The disposal section 55 has a disposal port 120 that discards the reaction container 70.

The power supply 56 is provided near the rear surface 21 side in the front/rear direction Y of the apparatus housing 10 and on the left side of the center in the left/right direction X. The power supply 56 supplies power supplied from an external power source to various apparatuses, such as the reagent container storage 52, the measuring unit 53, the controller 57, the dispenser 58, etc.

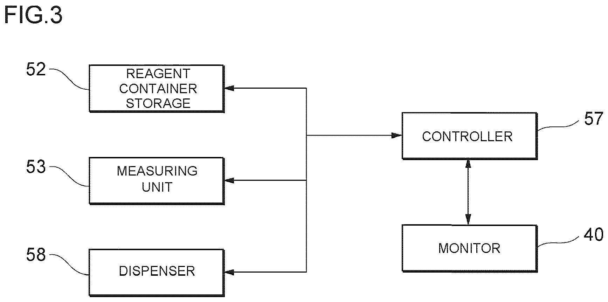

The controller 57 is provided near the rear surface 21 side in the front/rear direction Y of the apparatus housing 10 and on the right side of the center in the left/right direction X. The controller 57, as is illustrated in FIG. 3, can communicate with various apparatuses, such as the reagent container storage 52, the measuring unit 53, the dispenser 58, etc., and controls operations of the various apparatuses. The controller 57 has a memory and a CPU, and by the CPU executing a program stored in the memory, the controller 57 can control the various apparatuses and execute a sample measurement. The controller 57 can communicate with a monitor 40 and can execute a sample measurement based on information input from the monitor 40 and display a result of a sample measurement on the monitor 40.

As is illustrated in FIG. 2, the apparatus housing 10 has a vertical wall 140 provided on the rear surface 21 side rather than the center of the front/rear direction Y inside it. The vertical wall 140 has a plate shape with a plate surface directed in the front/rear direction Y. The vertical wall 140 isolates an interior of the apparatus housing 10 into a main region R1 and a rear region R2. The power supply 56 and the controller 57 are provided in the rear region R2. The power supply 56 and the controller 57 are mounted on a surface of a rear region R2 side of the vertical wall 140. The sample rack storage 50, the reaction container storage 51, the reagent container storage 52, the measuring unit 53, the cleaner 54, the disposal section 55, and the dispenser 58 are provided in the main region R1.

The dispenser 58 has a function of dispensing a sample container, the reaction container 70, and a reagent container. The dispenser 58 has a dispensing apparatus 150 and a moving apparatus 151 that moves the dispensing apparatus 150.

### Configuration of the dispenser 58

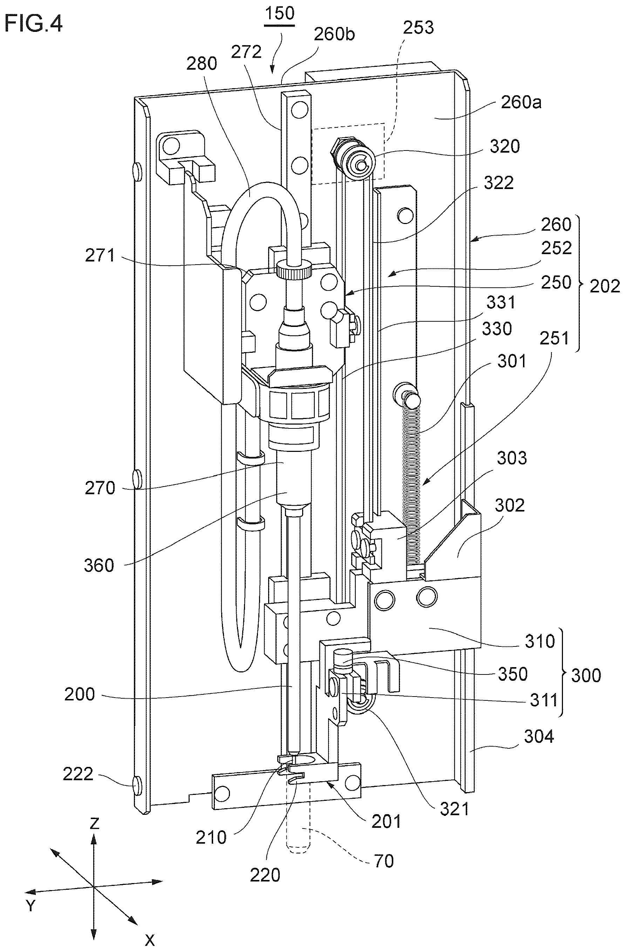

FIG. 4 is a schematic diagram illustrating a configuration of a dispensing apparatus 150. The dispensing apparatus 150 is provided with a pipette 200, a container holder 201, a movement mechanism 202, etc.

The pipette 200 is an elongated tube extending in a vertical direction Z and can hold a predetermined amount of liquid in a tube. The pipette 200 is configured to be able to aspirate liquid from a tip 210 and to discharge the aspirated liquid.

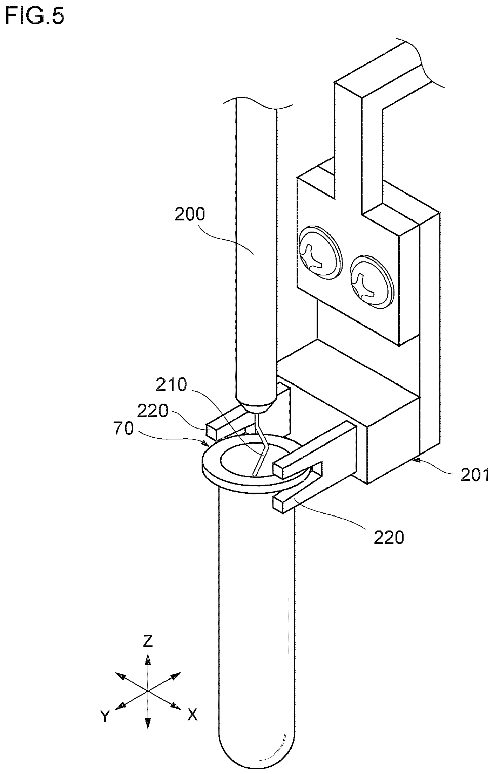

The container holder 201, as is illustrated in FIG. 5, has two (a pair of) holding arms 220 that hold the reaction container 70. The holding arms 220 are provided below the pipette 200 and can hold the reaction container 70 coaxially in the vertical direction Z of the pipette 200. The pipette 200 is thinner than a distance between the two holding arms 220 of the container holder 201 and can be inserted between the two holding arms 220 in the vertical direction Z.

As is illustrated in FIG. 4, the movement mechanism 202 moves the pipette 200 and the container holder 201 relative to each other in the vertical direction Z while maintaining the holding arms 220 and the pipette 200 coaxially.

The movement mechanism 202 has a mechanical mechanism configured so that in case that one of the pipette 200 and the container holder 201 is raised, the other is lowered in conjunction with it. Also, the movement mechanism 202 has a mechanical mechanism configured so that in case that the pipette 200 is lowered, the container holder 201 is raised in conjunction with it, and the container holder 201 is raised to a predetermined position, a linkage is released, and the pipette 200 is lowered while the rising of the container holder 201 is stopped. An example of such a mechanical mechanism is described below.

The movement mechanism 202 has a first movement section 250 that moves the pipette 200 in the vertical direction Z, a second movement section 251 that moves the container holder 201 in the vertical direction Z, an interlocking part 252 that interlocks the first movement section 250 and the second movement section 251, and a drive source 253 that drives the interlocking part 252.

The movement mechanism 202 has a substantially rectangular plate-shaped member 260. The plate-shaped member 260 is erected so that a plate surface faces in the left/right direction X. The first movement section 250, the second movement section 251, and the interlocking part 252 are provided on a first plate surface 260a on the right side (front side in FIG. 4) in the left/right direction X of the plate-shaped member 260. The drive source 253 is provided on a second plate surface 260b on the left side (back side of FIG. 4) in the left/right direction X of the plate-shaped member 260.

The first movement section 250 has a pipette holding member 270 that holds the pipette 200 and a first elevating member 271, to which the pipette holding member 270 is fixed and is elevated by the interlocking part 252.

A piping 280 is connected to a top of the pipette holding member 270 to conduct air supply and aspiration to an inside of the pipette 200. The piping 280 is connected to a pump apparatus.

The first elevating member 271 has a plate shape. The pipette holding member 270 is fixed to the plate surface on the right side of the first elevating member 271 in the left/right direction X.

The first elevating member 271 is movably attached to a first guide rail 272 provided toward the vertical direction Z of the plate-shaped member 260. The first elevating member 271 is attached to a belt 322 described below.

The second movement section 251 has a second elevating member 300, to which the container holder 201 is fixed and which can be raised and lowered freely, a biasing member 301 that biases the second elevating member 300 upward, a stopper 302 that stops the second elevating member 300 from rising, and a pressure member 303 that is raised and lowered by the interlocking part 252 and can press the second elevating member 300 downward.

The second elevating member 300 is provided with a body 310 and an arm 311 that connects the body 310 to the container holder 201.

The second elevating member 300 is movably attached to a second guide rail 304 provided toward the vertical direction Z of the plate-shaped member 260.

The biasing member 301 is a spring and is directed in the vertical direction Z. An upper end of the biasing member 301 is fixed to a position above the second elevating member 300 of the plate-shaped member 260, and the lower end is fixed to an upper part of the second elevating member 300. The biasing member 301 biases the second elevating member 300 upward.

The stopper 302 is provided at a position above the second elevating member 300 of the plate-shaped member 260. The stopper 302 is provided so that in case that the second elevating member 300 rises to a predetermined upper limit position, i.e., a predetermined position (the position illustrated in FIG. 4 and FIG. 5) where the pipette 200 is inserted into the reaction container 70 held by the holding arm 220 of the container holder 201, the stopper 302 contacts an upper part of the second elevating member 300 to stop the second elevating member 300 from rising.

The pressure member 303 is provided above the second elevating member 300. The pressure member 303 is attached to a belt 322 described below and can be raised and lowered freely by the belt 322. The pressure member 303 can push the second elevating member 300 downward in case that the pressure member 303 is lowered and can also be raised above the upper limit position of the second elevating member 300.

The second movement section 251 is configured so that in case that the second movement section 251 lowers the container holder 201, the pressure member 303 is lowered by the interlocking part 252 and the second elevating member 300 is pushed downward against a force of the biasing member 301, in case that the second movement section 251 raises the container holder 201, the pressure member 303 is raised by the interlocking part 252 and the second elevating member 300 is raised by the force of the biasing member 301, and in case that the container holder 201 is raised to a predetermined position, the second elevating member 300 is stopped from rising by the stopper 302.

The interlocking part 252 has a pair of pulleys 320 and 321 arranged in the vertical direction Z and a ring-shaped belt 322 hung on the pair of pulleys 320 and 321.

The pair of pulleys 320 and 321 are provided vertically in the plate-shaped member 260. The pair of pulleys 320 and 321 are provided between the first guide rail 272 of the first movement section 250 and the second guide rail 304 of the second movement section 251 in the front/rear direction Y. The pulley 320 is provided near an upper part of the plate-shaped member 260, and the pulley 321 is provided near a lower part of the plate-shaped member 260.

The belt 322 is hung on the pair of pulleys 320 and 321, and opposing belt portions 330 and 331 in the front/rear direction Y rise and lower in opposite directions via the pulleys 320 and 321.

The first movement section 250 is driven by the belt portion 330. In other words, the first elevating member 271 is attached to the belt portion 330, and the first elevating member 271, the pipette holding member 270 and the pipette 200 rise and lower as the belt portion 330 rises and lowers.

The second movement section 251 is driven by the belt portion 331. In other words, the pressure member 303 is attached to the belt portion 331, and the pressure member 303 rises and lowers as the belt portion 331 rises and lowers. The second elevating member 300 and the container holder 201 can rise and lower with the rising and lowering of the pressure member 303.

The drive source 253 is a single motor and is connected to the pulley 320. The drive source 253 is fixed to the second plate surface 260b on the left side of the plate-shaped member 260 in the left/right direction X. The drive source 253 can switch between forward rotation and reverse rotation and can rotate the belt 322 clockwise and counterclockwise through the pulley 320.

The movement mechanism 202 has a vibration member 350 that vibrates the reaction container 70 held in the container holder 201. The vibration member 350 is a vibrating element that vibrates by a power supply and is provided in the arm 311 of the second elevating member 300.

The movement mechanism 202 has a heating member 360 that heats a sample or reagent in the pipette 200. The heating member 360 is a heating element that generates heat by supplying electricity and is provided in the pipette holding member 270.

The moving apparatus 151 illustrated in FIG. 2 is configured to transfer the entire dispensing apparatus 150 to any position in the apparatus housing 10 in the left/right direction X and the front/rear direction Y.

### Configuration of the reagent container storage 52

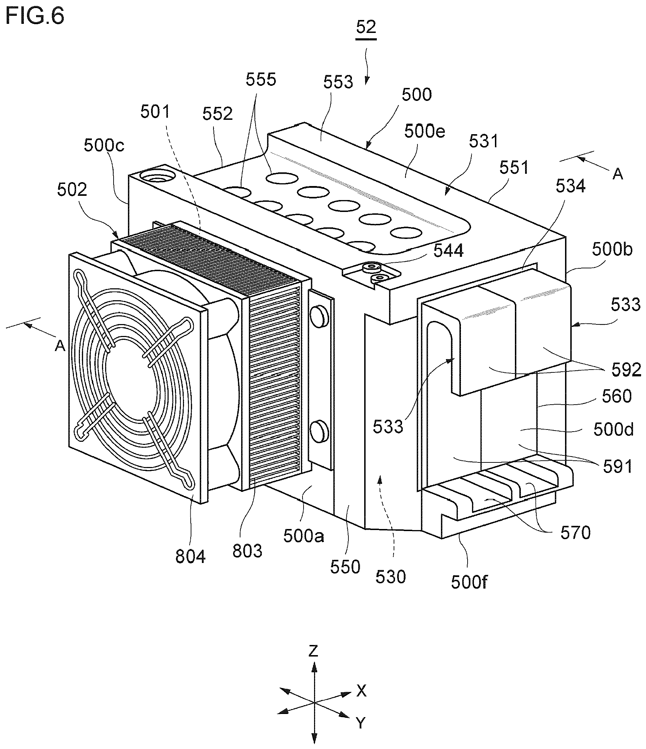

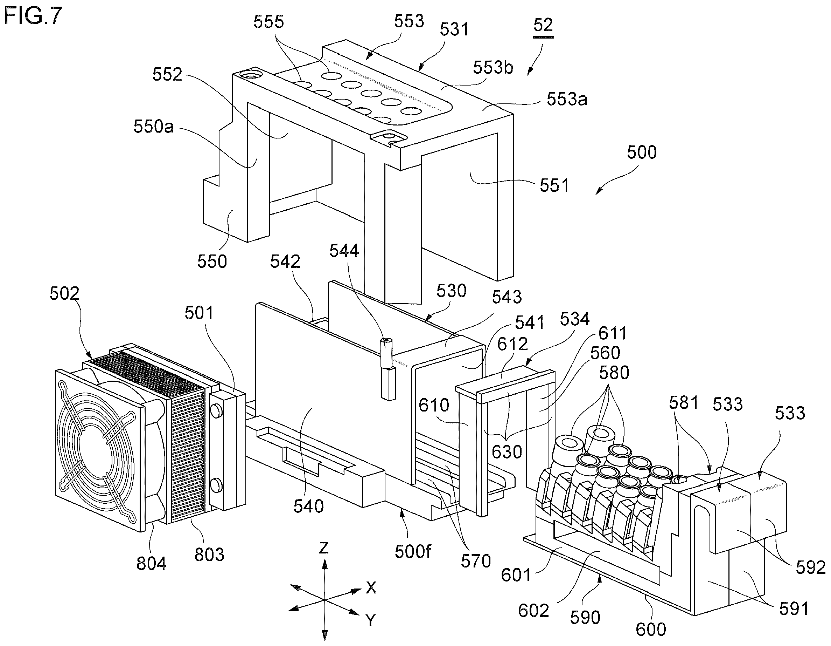

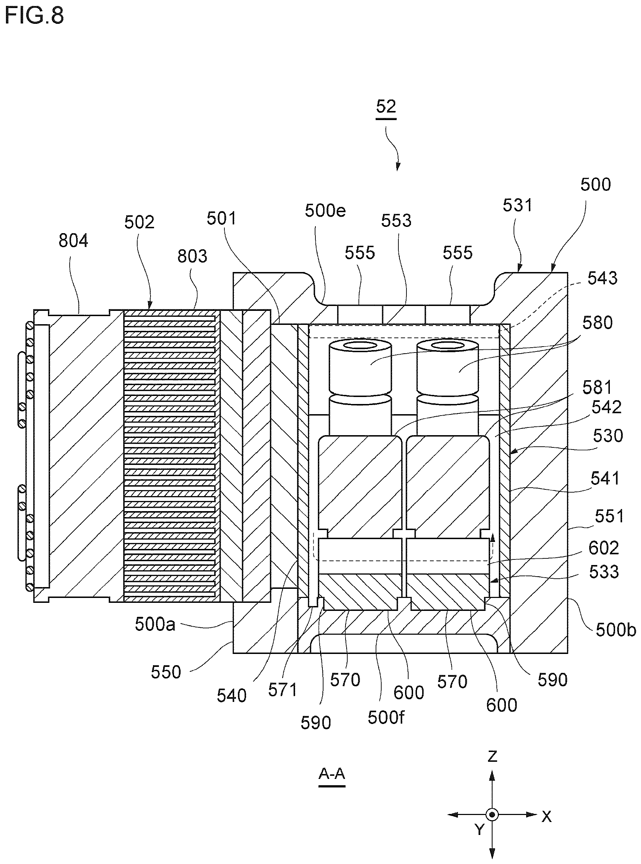

A configuration of the reagent container storage 52 is described below. FIG. 6 is a perspective view illustrating the reagent container storage 52, and FIG. 7 is an exploded view illustrating the reagent container storage 52. FIG. 8 is an A-A cross-sectional view illustrating the reagent container storage 52. As is illustrated in FIG. 6 to FIG. 8, the reagent container storage 52 has a housing 500, a cooling section 501, and a heat exhaust section 502.

### Configuration of the housing 500

The housing 500 stores a plurality of reagent containers. As is illustrated in FIG. 6, the housing 500 has a long substantially cuboid shape in the front/rear direction Y and forms a substantially cuboid shape space inside.

The housing 500 is a hexahedron structure and has a first side part 500a, a second side part 500b, a third side part 500c, a fourth side part 500d, a top part 500e, and a bottom part 500f.

As is illustrated in FIG. 7, the housing 500 has a heat transfer housing part 530, an insulation housing part 531, the bottom part 500f, a rack support 533, and an insulation member 534. The heat transfer housing part 530 is made of a heat conductive material, such as aluminum, etc. The heat transfer housing part 530 constitutes a part of an inner wall of the housing 500. The heat transfer housing part 530 has a first side wall 540 located on the left side of the left/right direction X, a second side wall 541 located on the right side of the left/right direction X, a third side wall 542 located on the rear side of the front/rear direction Y, and a top surface connection part 543 located on the upper part. A surface of a front side of the heat transfer housing part 530 in the front/rear direction Y is open.

The first side wall 540 and the second side wall 541 have a rectangular plate shape that is long in the front/rear direction Y. The first side wall 540 and the second side wall 541 are vertically arranged so that plate surfaces face in the left/right direction X. The first side wall 540 and the second side wall 541 are arranged to be opposite and parallel to each other.

The third side wall 542 has a square plate shape. The third side wall 542 is arranged vertically so that a plate surface faces in the front/rear direction Y. The third side wall 542 connects a rear side end of the first side wall 540 to a rear side end of the second side wall 541. The third side wall 542 is formed so that its height is lower than the first side wall 540 and the second side wall 541.

The top surface connection part 543 has a square plate shape. The top surface connection part 543 is horizontally arranged so that the plate surface faces in the vertical direction Z. The top surface connection part 543 connects an upper end of the front side of the first side wall 540 to the upper end of the front side of the second side wall 541. The top surface connection part 543 is not provided to cover the entire top part 500e of the housing 500, but covers only a part of the front side of the top part 500e of the housing 500. The top surface connection part 543 is provided at a position where the reagent container 580 stored in the housing 500 does not overlap in a plan view.

A temperature sensor 544 is provided in the first side wall 540. The temperature sensor 544 detects temperature of the heat transfer housing part 530. The controller 57 can control the cooling section 501 based on the temperature detected by the temperature sensor 544 and adjust the temperature in the housing 500. The controller 57 controls the cooling section 501 so that the temperature of the first side wall 540 as measured by the temperature sensor 544 is between 0°C and 10°C, e.g., 5°C.

The insulation housing part 531 is made of an insulation material, such as a Styrofoam, a cellulose fiber, etc. The insulation housing part 531 constitutes a part of an outer wall of the housing 500. The insulation housing part 531 has a first outer wall 550 located on the left side of the left/right direction X, a second outer wall 551 located on the right side of the left/right direction X, a third outer wall 552 located on the rear side of the front/rear direction Y, and a top outer wall 553 located on the upper part. The front side of the insulation housing part 531 in the front/rear direction Y is open.

The first outer wall 550 is located outside of the first side wall 540 and has a square opening 550a in the center. The second outer wall 551 has a rectangular plate shape that is long in the front/rear direction Y. The second outer wall 551 is arranged vertically so that the plate surface faces in the left/right direction X. The second outer wall 551 is arranged outside the second side wall 541 to cover the second side wall 541.

The third outer wall 552 has a square plate shape. The third outer wall 552 is arranged vertically so that the plate surface faces in the front/rear direction Y. The third outer wall 552 connects an end of the rear side of the first outer wall 550 and the end of the rear side of the second outer wall 551. The third outer wall 552 is arranged outside the third side wall 542 to cover the third side wall 542.

The top outer wall 553 has a rectangular plate shape that is long in the front/rear direction Y. The top outer wall 553 is arranged horizontally so that the plate surface faces in the vertical direction Z. The top outer wall 553 connects the upper end of the first outer wall 550 and the upper end of the second outer wall 551. The top outer wall 553 is provided to cover the entire top part 500e of the housing 500. The top outer wall 553 has a part 553a that covers the top surface connection part 543 and a part 553b that does not cover the top surface connection part 543.

The part 553b of the top outer wall 553 is provided with a through hole 555 for the pipette 200 of the dispenser 58 to enter and exit. A plurality of through holes 555 (five in this embodiment) are provided side by side along the front/rear direction Y. Also, the through holes 555 are provided in a plurality of rows (two rows in this embodiment) in the left/right direction X.

An opening 560 for the rack support 533 to enter and exit is formed in a surface of the front side of the heat transfer housing part 530 and the insulation housing part 531 in the front/rear direction Y.

In addition, in the present embodiment, the first side wall 540 of the heat transfer housing part 530 and the first outer wall 550 of the insulation housing part 531 constitute the first side part 500a of the housing 500, and the second side wall 541 of the heat transfer housing part 530 and the second outer wall 551 of the insulation housing part 531 constitute the second side part 500b of the housing 500. The third side wall 542 of the heat transfer housing part 530 and the third outer wall 552 of the insulation housing part 531 constitute the third side part 500c of the housing 500, and the top surface connection part 543 of the heat transfer housing part 530 and the top outer wall 553 of the insulation housing part 531 constitute the top part 500e of the housing 500.

The bottom part 500f has a rectangular plate shape that is long in the front/rear direction Y. The bottom part 500f is made of a material, such as resin, that has lower thermal conductivity than the heat transfer housing part 530. In the bottom part 500f, a rail 570, on which the rack support 533 slides, is formed. As is illustrated in FIG. 8, a groove 571 is formed at the left end of the bottom part 500f in the left/right direction X, where liquid is collected in case that internal condensation of the housing 500 occurs.

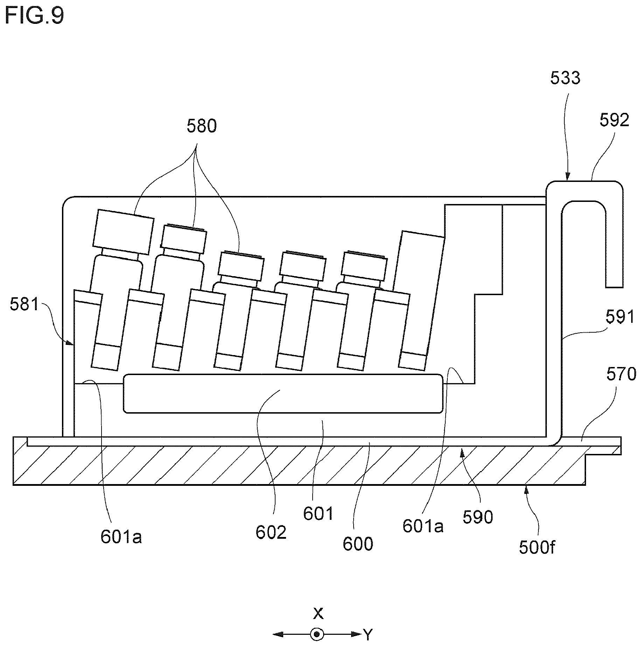

As is illustrated in FIG. 7, the rack support 533 supports a reagent container rack 581 that holds a plurality of reagent containers 580 in a row. The reagent container rack 581 has a long shape in a direction, in which the plurality of reagent containers 580 are lined up (front/rear direction Y in FIG. 7). Two of the rack supports 533 are provided side by side in the left/right direction X. FIG. 9 is a side view illustrating the rack support 533 from the left/right direction X. As is illustrated in FIG. 7 and FIG. 9, the rack support 533 has a bottom section 590 that is long in the front/rear direction Y, a front section 591 that extends upward at a front end of the bottom section 590, and a handle 592 that is formed on the front side of the front section 591.

The bottom section 590 has a slider 600 that moves the rail 570 in the front/rear direction Y and a placing section 601, on which the reagent container rack 581 is placed. The slider 600 fits into the rail 570. The placing section 601 has a protruding section 601a that protrudes upward from the slider 600. The protruding section 601a is provided at the front and the rear of the bottom section 590. The reagent container rack 581 is placed on the top surface of the protruding section 601a. With the reagent container rack 581 placed on the protruding section 601a, a ventilation passage 602 that passes through and vents in the left/right direction X is formed between the slider 600, the placing section 601 and the reagent container rack 581.

As is illustrated in FIG. 7, the front section 591 has a square plate shape viewed from the front. The front parts 591 of the two rack supports 533 are configured to be able to close the opening 560 of the heat transfer housing part 530 and the insulation housing part 531. In other words, the two front sections 591 serve as the fourth side part 500d of the housing 500. The housing 500 has no parts that vent internally and externally except for the through hole 555, which can form a sealed space inside.

The handle 592 is configured to extend from the upper end of the front section 591 to the front and then extend downward.

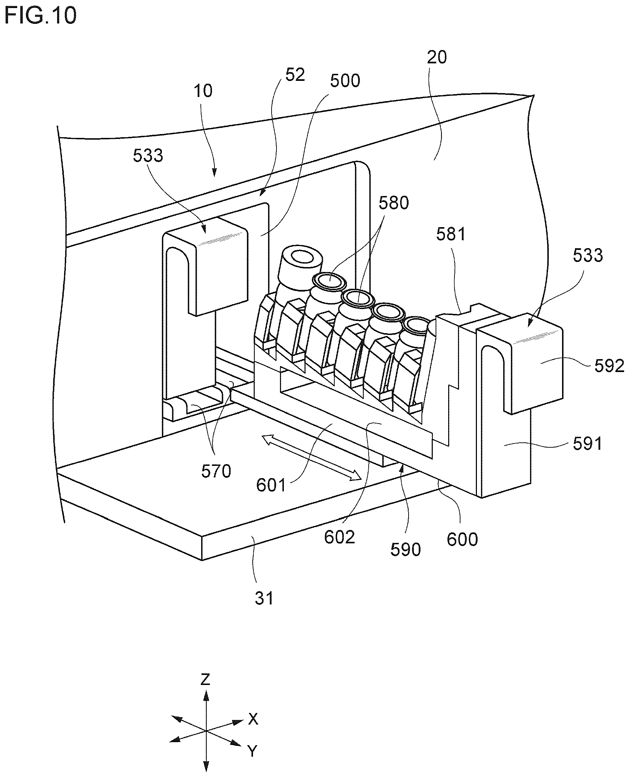

The rack support 533 is movable in the front/rear direction Y with respect to the housing 500 by the slider 600 moving on the rail 570 of the bottom part 500f. As a result, the rack support 533, as is illustrated in FIG. 10, can be freely pulled out from the apparatus housing 10 and the housing 500. By moving the rack support 533 in and out of the door 31 of the apparatus housing 10, the reagent container rack 581 and the reagent container 580 can be moved in and out of the apparatus housing 10. A position of the reagent container 580 stored in the housing 500 by the rack support 533 is aligned with the through hole 555 in the housing 500 in a plan view.

As is illustrated in FIG. 7, the insulation member (sealing member) 534 has a frame shape that can be fit into the front side of the heat transfer housing part 530. The insulation member 534 has a first side wall 610 that is located on the left side of the left/right direction X, a second side wall 611 that is located on the right side of the left/right direction X, and a top part 612 that is located on the upper part.

The first side wall 610 and the second side wall 611 have plate shapes that are long upward. The first side wall 610 and the second side wall 611 contact the inner surface of the first side wall 540 and the inner surface of the second side wall 541 of the heat transfer housing part 530, respectively. The top part 612 has a rectangular plate shape that is long in the left/right direction X. The top part 612 connects the upper end of the first side wall 610 and the upper end of the second side wall 611. The top part 612 contacts the inner surface of the top surface connection part 543 of the heat transfer housing part 530.

Each of the first side wall 610, the second side wall 611, and the top part 612 has a contacting section 630 that is in contact with the front section 591 of the rack support 533. The insulation member 534 prevents contact between the rack support 533 and the heat transfer housing part 530 and contact between the reagent container rack 581 and the heat transfer housing part 530. Also, the insulation member 534 prevents air within the housing 500 from flowing out from between the rack support 533 and the heat transfer housing part 530.

### Configuration of the cooling section 501

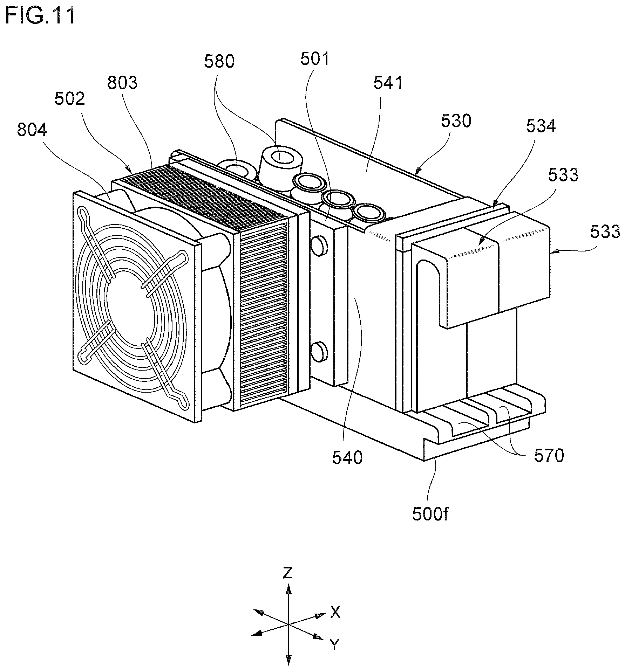

As is illustrated in FIG. 11, the cooling section 501 is made of a Peltier element. The cooling section 501 has a square plate shape. The cooling section 501 is bonded face to face to an outer surface of the first side wall 540 of the heat transfer housing part 530.

### Configuration of the heat exhaust section 502

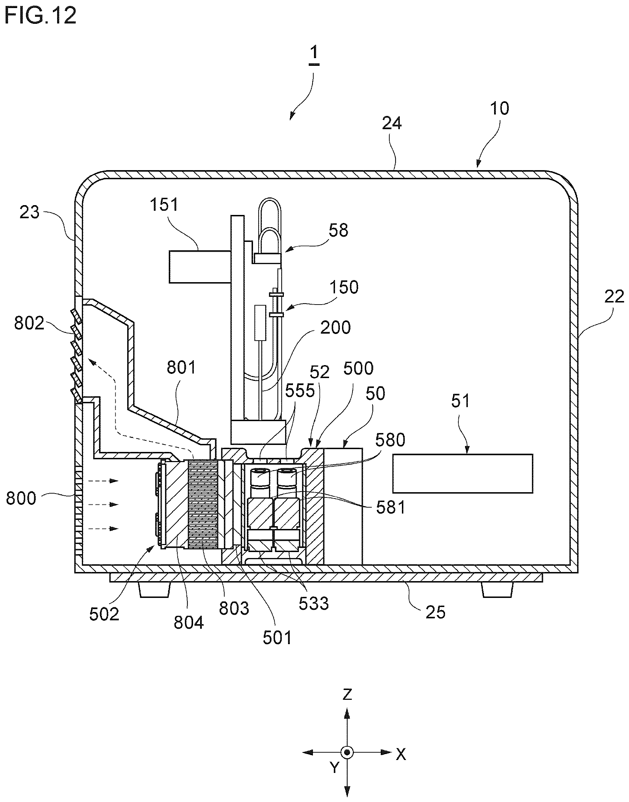

As is illustrated in FIG. 12, the heat exhaust section 502 has an inlet 800, a duct 801, an exhaust port 802, a heat sink 803, and a fan 804.

The heat sink 803 is mounted on the left side of the cooling section 501 in the left/right direction X, and the fan 804 is mounted on the left side of the heat sink 803 in the left/right direction X.

The inlet 800 and the exhaust port 802 are provided on a left side surface 23 of the apparatus housing 10 in the left/right direction X. The inlet 800 and the exhaust port 802 are located vertically, and the exhaust port 802 is provided on a position higher than the inlet 800. The duct 801 is formed so that the duct 801 reaches the fan 804 from the inlet 800 and reaches the exhaust port 802 from the heat sink 803.

### Sample measuring method

Next, an example of a sample measurement using the sample measuring apparatus 1 configured as described above is described. FIG. 13 illustrates an example of a processing flow of the overall sample measurement.

In the sample measurement of the sample measuring apparatus 1, a starting process S1 of a cooling process T1 of a reagent, a transferring process S2 of a reaction container, a dispensing process S3 of a sample, a dispensing process S4 of a reagent, a measuring process S5, and a collection and disposal process S6 of a reaction container are mainly performed in this order. The cooling process T1 of a reagent is performed continuously while the other processes S2 to S6 are performed. Each of these processes is executed by the controller 57.

Before the sample measurement begins, as is illustrated in FIG. 2, a plurality of empty reaction containers 70 are stored in the reaction container storage 51. Also, a plurality of sample containers, in which samples are stored, are held in a sample rack, and the sample rack is stored in the sample rack storage 50 through a door 32 illustrated in FIG. 1.

A reagent used in the sample measurement, as is illustrated in FIG. 10, is stored in a plurality of the reagent containers 580, the plurality of the reagent containers 580 are held in the reagent container rack 581, and the reagent container rack 581 is supported by the rack support 533. Then, the rack support 533 is placed into the housing 500 of the reagent container storage 52 from the door 31 of the apparatus housing 10 along the rail 570, and the reagent container 580 is stored in the housing 500. At this time, a sealed space is formed inside the housing 500 with a plurality of reagent containers 580 stored inside.

Then, the cooling process T1 of a reagent is started (process S1 in FIG. 13). First, the cooling section 501 illustrated in FIG. 8 is activated, and the housing 500 is cooled. At this time, the cooling section 501 absorbs heat from the first side wall 540 of the heat transfer housing part 530 of the housing 500. In this way, the first side wall 540 of the heat transfer housing part 530 is cooled, causing natural convection of cold air generated above the housing 500 to flow downward and through the ventilation passage 602, thereby lowering the temperature of an interior space of the housing 500 below a target temperature.

Also, the temperature of the first side wall 540, where the cooling section 501 is located, is the lowest, next, the temperature of the top surface connection part 543 and the third side wall 542 is the second lowest, then the temperature of the second side wall 541 is the third lowest, and the temperature of the bottom part 500f is the highest. In this way, a temperature distribution in the interior space of the housing 500 is created, and natural convection occurs. In the natural convection, first, the air with a lower temperature near the first side wall 540 flows downward through a gap between the first side wall 540 and the reagent container 580 toward the bottom part 500f, where the temperature is the highest, then flows to the right in the left/right direction X through the ventilation passage 602 below the reagent container rack 581 on the bottom part 500f, and then flows upward through a gap between the second side wall 541 and the reagent container 580, then flows to the left in the left/right direction X through a gap between the top surface connection part 543 and the top outer wall 553 and the reagent container 580, then flows back near the first side wall 540, and this circulation is continued.

Meanwhile, outside the housing 500, as is illustrated in FIG. 12, the fan 804 outside the cooling section 501 is activated, and the air from outside the apparatus housing 10 flows into the duct 801 from the inlet 800 and is supplied to the heat sink 803. The heat generated by the cooling section 501 is transferred to the air at the heat sink 803. The air passing through the heat sink 803 reaches the exhaust port 802 through the duct 801 along with the heat and is exhausted from the exhaust port 802 to the outside of the apparatus housing 10. Thus, the heat of the cooling section 501 is exhausted to the outside of the apparatus housing 10.

As is illustrated in FIG. 13, after the cooling process T1 of a reagent starts, the transferring process S2 of a reaction container is performed. In the transferring process S2 of a reaction container, first, the container holder 201 of the dispensing apparatus 150 illustrated in FIG. 2 moves from an initial position above the container rack 71 of the reaction container storage 51, and then lowers to hold the empty reaction container 70 in the container rack 71.

Next, the container holder 201 of the dispensing apparatus 150 moves above the heater 80 and then lowers, and the reaction container 70 is held in the holding hole 90 of the heater 80. Then, the container holder 201 rises.

Then, the dispensing process S3 of a sample (illustrated in FIG. 13) is performed. First, the pipette 200 of the dispensing apparatus 150 illustrated in FIG. 2 moves above the sample rack storage 50 and lowers. The pipette 200 is inserted into a sample container of a sample rack in the sample rack storage 50 through the hole 61 in the top surface 60 and aspirates a sample.

Then, the pipette 200 rises above the sample rack storage 50 and moves above the heater 80. The pipette 200 lowers toward the reaction container 70 in the heater 80 and injects a sample into the reaction container 70.

Next, the pipette 200 rises above the heater 80 and moves above the cleaner 54. The pipette 200 lowers toward the cleaning tank 110 of the cleaner 54, is inserted into the cleaning tank 110, and is cleaned. Finally, the pipette 200 rises above the cleaner 54.

Next, the dispensing process S4 of a reagent is performed (illustrated in FIG. 13). First, the pipette 200 of the dispensing apparatus 150 illustrated in FIG. 2 moves above the housing 500 of the reagent container storage 52. Then, the pipette 200 lowers and enters the housing 500 through the through hole 555 in the top outer wall 553. The pipette 200 is further inserted into the reagent container 580 of the reagent container rack 581 and aspirates a reagent of the reagent container 580.

Then, the pipette 200 rises above the reagent container storage 52. Next, the reagent of the pipette 200 is heated by the heating member 360. While the reagent of the pipette 200 is heated, the pipette 200 moves above the heater 80.

Next, the container holder 201 of the dispensing apparatus 150 lowers toward the reaction container 70 of the heater 80 and holds the reaction container 70 of the heater 80.

Next, as is illustrated in FIG. 5, as the container holder 201 rises above the heater 80, the pipette 200 lowers and is inserted into the reaction container 70. Then, the pipette 200 injects a reagent into the reaction container 70 of the container holder 201. Next, the reaction container 70 of the container holder 201 is vibrated by the vibration member 350, and a sample containing the reagent is agitated.

Next, the container holder 201 illustrated in FIG. 2 moves above the detector 81 and lowers. The container holder 201 lowers toward the holding hole 100 of the detector 81 and makes the holding hole 100 hold the reaction container 70. Finally, the container holder 201 rises above the detector 81.

Next, the measuring process S5 (illustrated in FIG. 13) is performed. In the detector 81, a blood coagulation measurement is performed to analyze an activity of a coagulation factor of a sample in the reaction container 70.

Finally, the collection and disposal process S6 of the reaction container (illustrated in FIG. 13) is performed. First, the container holder 201 of the dispensing apparatus 150 illustrated in FIG. 2 moves above the detector 81 and lowers. Next, the container holder 201 holds the reaction container 70 of the detector 81.

Next, the container holder 201 rises above the detector 81 and moves above the disposal section 55. The container holder 201 lowers toward the disposal port 120 of the disposal section 55 and disposes the reaction container 70 in the disposal port 120. Finally, the container holder 201 rises above the disposal section 55 and then is returned to the initial position.

According to this embodiment, the reagent container storage 52 of the sample measuring apparatus 1 has the housing 500, the cooling section 501 that cools the housing 500, and the reagent container rack 581 that holds the reagent container 580 in the housing 500, the cooling section 501 is provided on the first side wall 540, which is a part of the first side part 500a of the housing 500, and the ventilation passage 602 is provided between the reagent container rack 581 and the bottom part 500f in the housing 500. In such a case, since the first side wall 540 of the housing 500 is cooled by the cooling section 501, a downward air flow near the first side wall 540 in the housing 500 occurs, and natural convection that flows through the ventilation passage 602 in the housing 500 occurs. Therefore, it is not necessary to provide a fan for circulating air inside the housing 500 and can accommodate downsizing of the apparatus. In addition, cooling by natural convection allows cool air to spread inside the housing 500 and cool the plurality of reagent containers 580 from the surroundings, thereby enabling uniform temperature control of the reagents in the plurality of reagent containers 580.

In the top part 500e of the housing 500, a through hole 555 is provided for the pipette 200 to enter and exit. In such a case, the pipette 200 is outside the housing 500, and the pipette 200 can enter the housing 500 to aspirate a reagent as needed. Therefore, a volume of the housing 500 can be reduced, and as a result, strong natural convection can be reliably generated in the housing 500. Thus, the reagent in the reagent container 580 inside the housing 500 can be cooled stably and sufficiently.

The housing 500 has the heat transfer housing part 530, the heat transfer housing part 530 has the first side wall 540, a second side wall 541, and the top surface connection part 543, and the cooling section 501 is provided in the first side wall 540. In this way, the entire heat transfer housing part 530 can be suitably cooled, and the reagent can be cooled from above and the left and right of the reagent container 580. As a result, the reagent in the reagent container 580 can be cooled suitably and stably. In addition, since the heat transfer housing part 530 itself is cooled by the cooling section 501 first, and then the air inside the housing 500 is cooled, which in turn the reagent container 580 is cooled, condensation on the reagent container 580 can be suppressed.

The bottom part 500f of the housing 500 includes a material with lower thermal conductivity than the heat transfer housing part 530. This results in a larger temperature difference between the first side wall 540 and the bottom part 500f, where the cooling section 501 is provided. As a result, the downward airflow from the vicinity of the first side wall 540 toward the bottom part 500f becomes stronger and natural convection becomes stronger so that the reagent in the reagent container 580 can be sufficiently cooled.

The top surface connection part 543 of the heat transfer housing part 530 is provided in a plan view where the top surface connection part 543 does not overlap the reagent container 580 stored in the housing 500. In this way, in case that the top surface connection part 543 is cooled and condensation occurs, a water droplet is prevented from falling into the reagent container 580.

The housing 500 is configured to be capable of storing a plurality of reagent containers 580 side by side along the front/rear direction Y along the first side wall 540 and the second side wall 541. Also, the housing 500 is configured to store the reagent container rack 581 with a longitudinal direction of the reagent container rack 581 facing in the front/rear direction Y orthogonal to the left/right direction X from the first side wall 540 to the second side wall 541. In this way, a path along the inner wall of the housing 500 in a direction, in which natural convection occurs, is shortened, which facilitates strong natural convection. As a result, the reagent in the reagent container 580 can be sufficiently cooled.

Since the housing 500 has the insulation housing part 531 that covers the heat transfer housing part 530, the heat transfer housing part 530 can be cooled efficiently.

The reagent container storage 52 has, in the housing 500, the rack support 533 that supports the reagent container rack 581, and the rack support 533 is configured to be freely pulled out from the housing 500. In this way, easy removal and replacement of the reagent container 580 can be made.

The ventilation passage 602 is formed between the reagent container rack 581 and the rack support 533. In this way, the ventilation passage 602 for natural convection to pass through can be suitably formed.

The sample measuring apparatus 1 is provided with the heat exhaust section 502 that exhausts the heat generated by the cooling section 501. In this way, the heat from the cooling section 501 does not stay in the housing 500 so that cooling of the reagent in the reagent container 580 in the housing 500 can be properly performed.

The sample measuring apparatus 1 is provided with an apparatus housing 10 that has the measuring unit 53 and the reagent container storage 52 inside. As a result, the housing 500 of the reagent container storage 52 is located inside the apparatus housing 10. Therefore, the volume of the housing 500 can be reduced, and the reagent in the reagent container 580 inside the housing 500 can be efficiently cooled.

The housing 500 is configured so that natural convection generated inside the housing 500 by cooling of the cooling section 501 circulates between the first side part 500a of the housing 500 and the reagent container 580, the ventilation passage 602, between the second side part 500b of the housing 500 and the reagent container 580, and between the top part 500e of the housing 500 and the reagent container 580 in this order. Therefore, cooling of the reagent in the reagent container 580 in the housing 500 can be properly performed.

The above description of suitable embodiments of the invention is given with reference to the accompanying drawings, but the invention is not limited to such examples. It is clear that a person skilled in the art can conceive of various examples of changes or modifications within the scope of the ideas described in the claims, which are naturally understood to be within the technical scope of the invention.

The sample measuring apparatus 1 described in the above embodiments may have other configurations. The housing 500 of the reagent container storage 52, the heat transfer housing part 530, the insulation housing part 531, the bottom part 500f, the rack support 533, etc. may have other configurations. The cooling section 501 and the heat exhaust section 502 may also have other configurations. The cooling section 501 is not limited to the Peltier element, but may have other cooling functions. The cooling section 501 need not consist of a single element, such as the Peltier element, etc., but may consist of multiple elements.

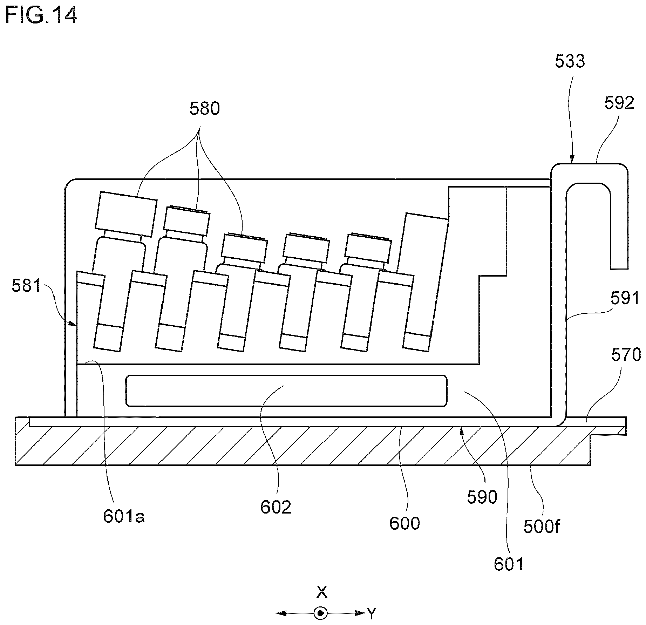

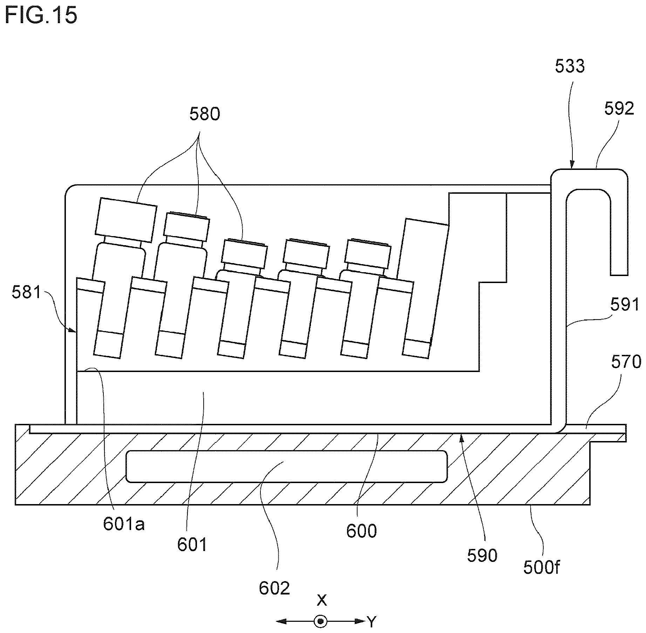

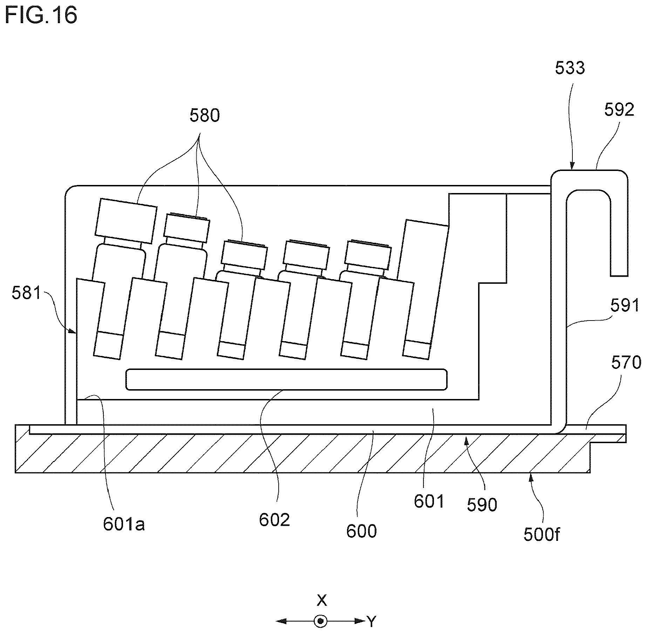

The ventilation passage 602 may be formed in the rack support 533 as is illustrated in FIG. 14. In this case, the ventilation passage 602 may be formed to penetrate the bottom section 590 of the rack support 533. Also, the ventilation passage 602 may be formed in the bottom part 500f as is illustrated in FIG. 15. In this case, the ventilation passage 602 may be formed to penetrate the bottom of the rail 570. Further, the ventilation passage 602 may be formed in the reagent container rack 581 as is illustrated in FIG. 16.

The cooling section 501 is provided on the first side wall 540, which is a part of the first side part 500a of the housing 500, but may be provided on any of the other side parts 500b, 500c, or 500d. Also, the cooling section 501 may be provided on the top part 500e of the housing 500. In such a case, by the top part 500e of the housing 500 being cooled, the air near a top portion in the housing 500 descends, and natural convection to flow through the ventilation passage 602 is formed; therefore, the reagent in the reagent container 580 can be cooled. Also, the cooling section 501 may be provided in other parts of the housing 500, as long as a part of the cooling section 501 is provided higher than the ventilation passage 620 in the housing 500. The cooling section 501 may be provided throughout the side parts 500a, 500b, 500c, and 500d of the housing 500, or the entire top part 500e. The cooling section 501 may be provided throughout both the side parts 500a, 500b, 500c, and 500d and the top part 500e of the housing 500. In addition, the cooling section 501 may be provided on a part of the side parts 500a, 500b, 500c, and 500d and the top part 500e. The cooling section 501 need not be in direct contact with the housing 500, but may be in indirect contact via a heat transfer component, such as a heat sink, etc.

The sample measuring apparatus of the present invention can be applied to a sample measurement other than a blood coagulation measurement, a blood immunoassay, a blood cell count measurement, a biochemical analysis, a urine analysis, etc.

As a supplementary note, a sample measuring apparatus according to one or more embodiments are summarized.

A sample measuring apparatus comprising:
a reagent container storage for storing reagent container with a reagent, the reagent container storage comprises:
   a housing for accommodating the reagent container; and
   a cooling section for cooling the housing; and
a measuring unit for measuring a sample using the reagent, wherein
a ventilation passage is arranged below the reagent container in the housing, and
at least a part of the cooling section is provided in the housing at a higher part of the housing than the ventilation passage.

In the sample measuring apparatus, the housing comprises a top part, a bottom part, and a side part, and
the cooling section is provided on the side part or the top part of the housing.

In the sample measuring apparatus, the side part comprises:
a first side part; and
a second side part that is arranged facing the first side part, and
   the cooling section is provided on one of the first side part and the second side part in the housing.

In the sample measuring apparatus, the sample measuring apparatus further comprises:
a pipette for aspirating a reagent stored in the reagent container in the reagent container storage and dispenses the reagent into a reaction container, in which the sample is stored; and
a through hole for the pipette to enter and exit that is arranged on a top part of the housing.

In the sample measuring apparatus, the housing comprises a heat transfer housing part that has thermal conductivity, wherein
the heat transfer housing part comprises:
a first side wall;
a second side wall that is arranged facing the first side wall across the reagent container; and
a top surface connection part for connecting the first side wall and the second side wall, and
the cooling section is provided on the first side wall, the second side wall, or the top surface connection part.

In the sample measuring apparatus, the cooling section is provided on the first side wall or the second side wall.

In the sample measuring apparatus, the bottom part of the housing comprises a material that has a lower thermal conductivity than the heat transfer housing part.

In the sample measuring apparatus, the top surface connection part of the heat transfer housing part is provided in a location where the top surface connection part does not overlap a reagent container accommodated in the housing in a plan view.

In the sample measuring apparatus, the housing accommodates a plurality of reagent containers side by side along a direction perpendicular to a direction from the first side wall to the second side wall.

In the sample measuring apparatus, the reagent container is accommodated in the housing while being stored in a reagent container rack, wherein
the reagent container rack has a shape that extends in a longitudinal direction, in which a plurality of reagent containers are accommodated side by side, and
the housing accommodates the reagent container rack with the longitudinal direction of the reagent container rack oriented in a direction perpendicular to a direction from the first side wall to the second side wall.

In the sample measuring apparatus, the housing comprises an insulation housing part for covering the heat transfer housing part.

In the sample measuring apparatus, the reagent container is accommodated in the housing while being stored in a reagent container rack, and
the reagent container storage comprises a rack support for supporting the reagent container rack in the housing, wherein
the rack support is freely pulled out from the housing.

In the sample measuring apparatus, the ventilation passage is provided between the reagent container rack and the rack support.

In the sample measuring apparatus, the ventilation passage is provided in the rack support.

In the sample measuring apparatus, the bottom part of the housing comprises a rail for sliding the rack support, and the ventilation passage is provided in the rail.

In the sample measuring apparatus, the ventilation passage is provided in the reagent container rack.

In the sample measuring apparatus, the sample measuring apparatus further comprises:
a heat exhaust section for exhausting heat generated by the cooling section.

In the sample measuring apparatus, the sample measuring apparatus further comprises:
an apparatus housing for accommodating the measuring unit and the reagent container storage inside.

In the sample measuring apparatus, natural convection generated inside the housing by cooling of the cooling section circulates between the first side part of the housing and the reagent container, the ventilation passage, between the second side part facing the first side part of the housing and the reagent container, and between the top part of the housing and the reagent container in the order.

A method of measuring a sample using a sample measuring apparatus, in which a ventilation passage is provided below a reagent container in a housing that the reagent container is accommodated comprising:
cooling a reagent in the reagent container by cooling at least a part of the housing that is higher than the ventilation passage;
aspirating the cooled reagent in the reagent container and dispenses the cooled reagent into a reaction container; and
measuring a sample in the reaction container, into which the cooled reagent is dispensed.

In the method of measuring a sample, the housing comprises a heat transfer housing part that has thermal conductivity, wherein
the heat transfer housing part comprises:
   a first side wall;
   a second side wall that is arranged facing the first side wall across the reagent container; and
   a top surface connection part for connecting the first side wall and the second side wall, and
the cooling a reagent in the reagent container comprising cooling an entire heat transfer housing part.

In the method of measuring a sample, in the cooling a reagent in the reagent container, natural convection generated inside the housing circulates between a first side part of the housing and the reagent container, the ventilation passage, between a second side part facing the first side part of the housing and the reagent container, and between a top part of the housing and the reagent container in the order.

### INDUSTRIAL APPLICABILITY

The present invention is useful in providing a sample measuring apparatus and a sample measuring method that can accommodate downsizing of an apparatus.

### DESCRIPTION OF SIGN

1: Sample measuring apparatus, 52: Reagent container storage, 53: Measuring unit, 70: Reaction container, 500: Housing, 500a to 500d: Side parts, 500e: Top part, 500f: Bottom part, 501: Cooling section, 502: Heat exhaust section, 533: Rack support, 580: Reagent container, 581: Reagent container rack, 602: Ventilation passage

## Claims

1. A sample measuring apparatus comprising:
a reagent container storage for storing reagent container with a reagent, the reagent container storage comprises:
a housing for accommodating the reagent container; and
a cooling section for cooling the housing; and
a measuring unit for measuring a sample using the reagent, wherein
a ventilation passage is arranged below the reagent container in the housing, and
at least a part of the cooling section is provided in the housing at a higher part of the housing than the ventilation passage.

2. The sample measuring apparatus according to claim 1, wherein
the housing comprises a top part, a bottom part, and a side part, and
the cooling section is provided on the side part or the top part of the housing.

3. The sample measuring apparatus according to claim 2, wherein
the side part comprises:
a first side part; and
a second side part that is arranged facing the first side part, and
the cooling section is provided on one of the first side part and the second side part in the housing.

4. The sample measuring apparatus according to claim 1 further comprising:
a pipette for aspirating a reagent stored in the reagent container in the reagent container storage and dispenses the reagent into a reaction container, in which the sample is stored; and
a through hole for the pipette to enter and exit that is arranged on a top part of the housing.

5. The sample measuring apparatus according to any one of claims 1 to 4, wherein
the housing comprises a heat transfer housing part that has thermal conductivity, wherein
the heat transfer housing part comprises:
a first side wall;
a second side wall that is arranged facing the first side wall across the reagent container; and
a top surface connection part for connecting the first side wall and
the second side wall, and
the cooling section is provided on the first side wall, the second side wall, or the top surface connection part.

6. The sample measuring apparatus according to claim 5, wherein
the cooling section is provided on the first side wall or the second side wall.

7. The sample measuring apparatus according to claim 5, wherein,
the bottom part of the housing comprises a material that has a lower thermal conductivity than the heat transfer housing part.

8. The sample measuring apparatus according to claim 5, wherein
the top surface connection part of the heat transfer housing part is provided in a location where the top surface connection part does not overlap a reagent container accommodated in the housing in a plan view.

9. The sample measuring apparatus according to claim 5, wherein
the housing accommodates a plurality of reagent containers side by side along a direction perpendicular to a direction from the first side wall to the second side wall.

10. The sample measuring apparatus according to claim 5, wherein
the reagent container is accommodated in the housing while being stored in a reagent container rack, wherein
the reagent container rack has a shape that extends in a longitudinal direction, in which a plurality of reagent containers are accommodated side by side, and
the housing accommodates the reagent container rack with the longitudinal direction of the reagent container rack oriented in a direction perpendicular to a direction from the first side wall to the second side wall.

11. The sample measuring apparatus according to claim 5, wherein
the housing comprises an insulation housing part for covering the heat transfer housing part.

12. The sample measuring apparatus according to any one of claims 1 to 4, wherein
the reagent container is accommodated in the housing while being stored in a reagent container rack, and
the reagent container storage comprises a rack support for supporting the reagent container rack in the housing, wherein
the rack support is freely pulled out from the housing.

13. The sample measuring apparatus according to claim 12, wherein
the ventilation passage is provided between the reagent container rack and the rack support.

14. The sample measuring apparatus according to claim 12, wherein
the ventilation passage is provided in the rack support.

15. A method of measuring a sample using a sample measuring apparatus, in which a ventilation passage is provided below a reagent container in a housing that the reagent container is accommodated comprising:
cooling a reagent in the reagent container by cooling at least a part of the housing that is higher than the ventilation passage;
aspirating the cooled reagent in the reagent container and dispenses the cooled reagent into a reaction container; and
measuring a sample in the reaction container, into which the cooled reagent is dispensed.
